# EUROPÄISCHE PATENTSCHRIFT

(11) **EP 0 602 372 B1**
(45) Veröffentlichungstag und Bekanntmachung des Hinweises auf die Patenterteilung: **28.05.1997**
(21) Anmeldenummer: 93117884.2
(22) Anmeldetag: 04.11.1993
(51) Int. Cl.: H02G 3/22

(54) **Durchführungskörper für Leitungen**
Leading-through body for cable
Corps de traversée pour câble

(30) Priorität: 15.12.1992 DE 4242288
(43) Veröffentlichungstag der Anmeldung: 22.06.1994
(73) Patentinhaber: Bosch-Siemens Hausgeräte GmbH, 81669 München (DE)
(72) Erfinder: Glaser, Anton, D-89537 Giengen (DE)

(56) Entgegenhaltungen:
- DE-C- 4 109 206

## Beschreibung

Die Erfindung betrifft einen Durchführungskörper für Leitungen durch eine Wand, mit einer im wesentlichen deren Wandstärke überbrückenden Länge und wenigstens einer annähernd parallel zu seinen Mantellinien verlaufenden Durchführung, in welche ein Aufnahmekörper lösbar einsetzbar ist, welcher wenigstens eine im wesentlichen parallel zu seiner Längsachse verlaufende Aufnahme zur Halterung einer Leitung aufweist und welcher die Leitung bezüglich der Durchführung fixiert.

Aus der DE-OS 38 01 780 ist ein die Wärmeisolierung eines Kühlschranks durchdringender Durchführungskörper bekannt, der mit zwei Durchgangsbohrungen ausgestattet ist, von denen eine als Durchführung für eine von außen in den Kühlraum des Kühlschranks einbringbare und mit einer Lampenfassung kontaktierbare elektrische Leitung dient, während die andere als Aufnahme für eine Befestigungsschraube vorgesehen ist, mit deren Hilfe der Durchführungskörper an dem die Lampenfassung aufnehmenden Gehäuse befestigt ist.

Nachteilig bei einem derartigen Durchführungskörper ist, daß der Querschnitt seiner Durchführung auf den Querschnitt einer bestimmten elektrischen Leitung abgestimmt sein muß, um eine dichtende und fixierende Wirkung bezüglich der Leitungen zu erzielen. Eine Variation des Querschnitts der elektrischen Leitung, wie sie unter Umständen hersteller-bedingt auftreten kann, würde, um weiterhin eine dichtende und fixierende Wirkung bezüglich der Leitung zu erzielen, automatisch eine Anpassung des Durchführungsquerschnittes nach sich ziehen, die sich bei dieser Art von Durchführungskörper nicht nur in verschiedenen Variationen von Durchführungskörpem sondern auch, da dieser im Gehäuse des Kühlgerätes fest eingeschäumt ist, in unterschiedlichen Gehäusevariationen äußert, wodurch die Lagerhaltung der Gehäuse ziemlich aufwendig wird. Die gleiche Problematik, was die Lagerhaltung der Gehäuse anbetrifft, tritt zutage, wenn anstatt einer einzigen elektrischen Leitung aus irgendwelchen Gründen eine Mehrzahl solcher Leitungen für den Durchführungskörper in den Innenraum des Kühlschranks eingeführt werden sollen. Außerdem ist durch eine solche Konstruktion für einen Durchführungskörper ohne zusätzliche Maßnahmen eine ausreichende Zugentlastung für die elektrische Leitung nicht sicher gewährleistet.

Ferner ist bekannt, rohrförmig ausgeführte Durchführungskörper in die Wärmeisolation zu integrieren, wobei der Querschnitt von deren Durchführung gegenüber dem Querschnitt der darin angeordneten Leitungen erheblich vergrößert ist. Die Querschnittsunterschiede werden durch Einbringen einer elastischen Dichtmasse ausgeglichen, um eine Art luftdichte Verbindung zwischen der elektrischen Leitung und der Wandung der Durchführung zu erreichen.

Bei dieser Lösung wurde bereits sowohl den unter Umständen variierenden Querschnitten der Leitungen als auch der Anzahl der Leitungen Rechnung getragen, wobei jedoch die nicht zwangsläufig durch das Einbringen des elastischen Dichtmaterials erreichbare Dichtheit als problematisch anzusehen ist, da die Güte der Dichtheit hauptsächlich von der Sorgfalt einer das Dichtmittel einbringenden Arbeitsperson abhängt. Bei ungenügender Sorgfalt sind aufwendige Nachbesserungsarbeiten nicht zu vermeiden. Ferner muß zusätzlich für eine Zugentlastung der Leitung gesorgt sein.

Außerdem ist bekannt, anstatt des Dichtmittels auf die Durchführung angepaßte, aus elastischem Material gefertigte Dichtpfropfen einzusetzen, deren rotationssymmetrischer Pfropfenkörper mit einer über seine Länge angeordneten, randoffenen, rinnenförmig ausgebildeten Nut ausgestattet ist, in die die Leitung einlegbar ist. Der elastische Pfropfen wird zusammen mit der in der Nut eingelegten Leitung in die Durchführung eingedrückt, wobei der nicht von der Nut umschlossene Teil der Mantelfläche der elektrischen Leitung beim Eindrücken des elastischen Pfropfens gegen die Wand der Durchführung gepreßt wird. Sowohl für unterschiedliche Leitungsquerschnitte als auch für die sich unter Umständen ändernde Zahl der Leitungen sind jeweils angepaßte Pfropfen vorzusehen, so daß der Durchführungskörper, der beispielsweise im Gehäuse eines Kühlgerätes eingeschäumt ist, für alle Anwendungsfälle gleich ausgeführt sein kann, wodurch sich die Lagerhaltung der damit ausgestatteten Gehäuse wesentlich vereinfacht.

Nachteilig bei dieser Lösung ist jedoch, daß keine luftdichte Verbindung zwischen der Wandung der Durchführung und der mittels dem elastischen Pfropfen gegen die Wandung gepreßten Leitung zustande kommt.

Für den Fall, daß die beiden letztgenannten Lösungen bei einem Kühlgerät zum Einsatz kommen, zeigt sich das Problem, daß sich die Feuchtigkeit der das Kühlgerät umgebenden Atmosphäre am Verdampfer niederschlägt, so daß dieser je nach Luftfeuchtigkeit ständig mehr oder weniger stark vereist ist.

Darüberhinaus ist aus der DE-PS 41 09 206 eine bei Kraftfahrzeugen zum Einsatz kommende Kabeldurchführung bekannt, welche einen Haltekörper und einen in dessen Durchgangsöffnung einbringbaren, in Art eines Kreishohlzylinders ausgebildeten Aufnahmekörper aus weichelastischem Material, wie beispielsweise Moosgummi umfaßt. Dieser Aufnahmekörper weist neben den an seiner Mantelfläche widerhakenartig ausgebildeten Vorsprüngen eine in seinem Zentrum angeordnete und seine ganze Länge durchsetzende Durchgangsöffnung auf, welche als Kabeldurchführungen dient. Die zwischen der Mantelfläche und der Durchführungsöffnung verbleibende Wandung ist einerseits zur Erhöhung der Elastizität des Aufnahmekörpers mit in gleichmäßigen Winkelabständen eingebrachten Hohlräumen versehen und andererseits mit einem achsparallel zur Rotationsachse des Aufnahmekörpers verlaufenden Schlitz durchsetzt, über welchem Kabelleitungen in die Kabeldurchführung einbringbar sind.

Der konstruktive Aufbau des Aufnahmekörpers ist eindeutig auf weichelastische Materialien ausgelegt, welche jedoch zum Einsatz in Kältegeräten nicht geeignet sind, da einerseits ein solches weichelastisches Formteil nicht in der Lage ist, zur Beibehaltung seiner für die Dichtfunktion unerläßlichen Formgestalt dem notwendigen Montagedruck standzuhalten, welcher sich bei in Kältegeräten infolge der durch die Wärmeisolation bedingten verhältnismäßig großen Wandstärke ergibt. Andererseits neigt das weichelastische Material strukturbedingt zu einer hohen Feuchtigkeitsaufnahme, so daß es vorkommen kann, daß der als Dichtung dienende Aufnahmekörper gefriert und eine deutliche Funktionseinbuße erfährt, so daß dieser Aufnahmekörper zum Einsatz in Kältegeräten ungeeignet wäre. Die Ausführung des Aufnahmekörpers in zum Einsatz in Kältegeräten geeignetem thermoplastischem Material würde nach sich ziehen, daß das Einbringen der Kabelleitungen über die schlitzartige Öffnung in der Wandung des Aufnahmekörpers aufgrund der durch diesen Werkstoff deutlich erhöhten Steifigkeit, das Öffnen des Schlitzes zumindest deutlich erschwert, wenn nicht sogar unmöglich wäre.

Der Erfindung liegt die Aufgabe zugrunde, für einen Durchführungskörper gemäß dem Oberbegriff des Anspruches 1 Maßnahmen vorzuschlagen, aufgrund welcher mit einfachen konstruktiven Mitteln die Nachteile des Standes der Technik vermieden sind.

Diese Aufgabe wird gemäß der Erfindung dadurch gelöst, daß die Aufnahme im Aufnahmekörper im Nahbereich von dessen Mantelfläche angeordnet und durch einen filmscharnierartigen Wandabschnitt von dieser getrennt ist, und daß der dem filmscharnierartigen Wandabschnitt gegenüberliegende, an die Aufnahme angrenzende breitere Wandabschnitt entlang der Längsachse des Aufnahmekörpers mit einem Schlitz durchtrennt ist.

Die erfindungsgemäße Lösung zeichnet sich neben einer luftdichten und positionsgenauen Halterung der Leitung in der Durchführung noch dadurch aus, daß baugleiche Grundkörper für verschiedene Leitungsquerschnitte und Leitungsanzahlen zur Anwendung kommen können, so daß z.B. eine Herstellung gleichartiger Kühlschrankgehäuse möglich ist, deren unterschiedliche Ausstattungsmerkmale erst bei der Endmontage zu berücksichtigen sind. Hierdurch vereinfacht sich die Logistik derartiger Gehäuse wesentlich. Ferner bietet eine solche Lösung die Möglichkeit, sollte die Leitung oder ein damit verbundenes Gerät aus Schadensgründen ersetzt werden müssen, die Leitung auf einfache Weise zu demontieren und zu ersetzen. Außerdem ist es auf einfache Weise möglich, im Nachhinein eine Änderung der Ausstattungsmerkmale, sofern sie die Leitung und ein damit verbundenes Gerät betreffen, durchzuführen. Zudem kann auf eine Zugentlastung der Leitung verzichtet werden. Darüberhinaus bietet die erfindungsgemäße Lösung den Vorzug, auch steifere Werkstoffe auf thermoplastischer Basis einsetzbar sind, ohne daß dabei die zur Montage des Aufnahmekörpers auf die Leitung aufzubringende Kraft deutlich erhöht werden müßte.

Unter besonders geringer Kraftanstrengung ist eine Montage des Aufnahmekörpers auf eine an seinen freien Enden in Form von elektrischen Anschlüssen fixierten Leitung möglich, wenn nach einer vorteilhaften Ausgestaltung des Gegenstandes der Erfindung vorgesehen ist, daß die Aufnahme im kürzesten Abstand vom Zentrum des Querschnitts des Aufnahmekörpers im Bereich einer seiner Außenkontur begrenzenden Wandung angeordnet ist.

Der Vorteil einer solchen Lösung äußert sich besonders deutlich bei Aufnahmekörpern mit quadratischem, rechteckförmigem, dreieckförmigem oder ovalem Querschnitt.

Besonders montagefreundlich ausgebildet ist ein Aufnahmekörper, wenn nach einer weiteren bevorzugten Ausführungsform des Gegenstandes der Erfindung vorgesehen ist, daß die Aufnahme mittig zu der Trennebene angeordnet ist, welche den durch die Trennung des breiteren Wandabschnitts des Aufnahmekörpers gebildeten Trennflächen gemeinsam ist.

Entsprechend einer nächsten bevorzugten Ausgestaltung des Gegenstandes der Erfindung ist vorgesehen, daß die durch die Trennung entstandenen Trennflächen ohne Krafteinfluß auf die sich daran anschließenden Abschnitte des Aufnahmekörpers im Abstand zueinander angeordnet sind und bei in die Durchführung eingefügten Aufnahmekörper aneinander liegen und als Dichtflächen dienen.

Durch die zueinander beabstandeten Trennflächen wird einer den Aufnahmekörper montierenden Person das Öffnen des Aufnahmekörpers um die filmscharnierartige Wandung, um die Leitung in die Aufnahme einbringen zu können, wesentlich erleichtert.

Zudem dienen die im Abstand zueinander angeordneten Flächen als eine Art Einführhilfe für die Leitung in die Aufnahme.

Nach einer nächsten bevorzugten Ausführungsform des Gegenstandes der Erfindung ist vorgesehen, daß die Trennflächen im unbelasteten Zustand des Aufnahmekörpers zueinander V-förmig angeordnet sind.

Durch die V-förmige Anordnung der Trennflächen wird die zum Einbringen der Leitung in die Aufnahme auf den Aufnahmekörper ausgeübte Kraft in Kraftkomponenten zerlegt, welche das Öffnen des Aufnahmekörpers zum Einbringen der Leitung in die Aufnahme entgegen der durch die elastischen Materialeigenschaften des Aufnahmekörpers erzeugten Gegenkraft deutlich erleichtert. Zugleich dienen die V-förmig angeordneten Trennflächen als Aufgleitkufen und Einführschrägen für die in die Aufnahme einzubringende Leitung.

Gemäß einer weiteren bevorzugten Ausführungsform des Gegenstandes der Erfindung ist vorgesehen, daß die Mantelfläche des Aufnahmekörpers mit einer Mehrzahl von seinen Querschnitt verjüngenden, im wesentlichen durchgängig umlaufenden Nuten ausgestattet ist, wobei die durch die Nuten entstandenen, erhabenen Abschnitte als elastische Lamellen ausgebildet sind, die über die Länge des Aufnahmekörpers verteilt angeordnet sind und sich an die Wandung der Durchführung anlegen, durch eine luftdichte Verbindung zwischen diese und dem Aufnahmekörper erzeugt und der Aufnahmekörper in der Durchführung gehalten ist.

Der Vorteil einer solchen Lösung ist darin zu sehen, daß je nach Befestigungs- und/oder Dichtungsanforderung zwischen der Leitung und der Wandung der Durchführung ein entsprechender Aufnahmekörper einsetzbar ist, dessen Lamellen in ihrer Ausführung und in ihrem Abstand zueinander den gestellten Anforderungen gerecht werden. Zusätzlich ist dabei noch möglich, durch Koextrusion die Lamellen mit anderen Wirkstoffeigenschaften auszustatten, als den sie tragenden Körper.

Besonders sicher luftdicht gehalten und geführt ist die Leitung in dem Aufnahmekörper, wenn nach einer weiteren bevorzugten Ausführungsform des Gegenstandes der Erfindung vorgesehen ist, daß dieser mit wenigstens einer parallel zu seiner Längsachse verlaufenden Aufnahme für die Leitung ausgestattet ist, in der die Leitung an ihrer Mantelfläche infolge der auf diese kraftschlüssig auf diese allseitig einwirkenden Wandung der Aufnahme manschettenartig luftdicht gehalten ist.

Gemäß einer nachsten bevorzugten Ausführungsform des Gegenstandes der Erfindung ist vorgesehen, daß die Aufnahme an ihrer der Mantelfläche der Leitung zugewandten Oberfläche und eine der Trennflächen mit zusammenhängenden, schneidenartigen Vorsprüngen ausgestattet ist, die die Dichtwirkung bezüglich dem Dichtpartner zusätzlich unterstützen.

Eine solche Lösung hat den Vorzug, daß unabhängig von der Oberflächenbeschaffenheit der Dichtpartner eine Dichtwirkung hoher Güte zwischen den Dichtpartner erzeugt ist.

Gemäß einer weiteren bevorzugten Ausführungsform des Gegenstandes der Erfindung ist vorgesehen, daß bei einem Durchführungskörper mit einer Abtropfkante die Abtropfkante als schneidenförmiger Bund an einer Bundbuchse ausgebildet ist, die eine luftdichte Verbindung zwischen der Wandung der Durchführung und seiner Mantelfläche schaffend, in den Durchführungskörper einführbar ist.

Eine solche Lösung zeichnet sich einerseits durch ihren einfachen konstruktiven Aufbau und andererseits durch ihre im Reparaturfall einfach auszuführende Montage und Demontage aus.

Besonders zweckmäßig ist die Bundbuchse ausgeführt, wenn nach einer nächsten vorteilhaften Ausgestaltung des Gegenstandes der Erfindung vorgesehen ist, daß in deren Innendurchmesser der Aufnahmekörper derart eingefügt ist, daß seine Lamellen luftdicht an der den Innendurchmesser begrenzenden Wandung anliegen, wobei die Einführtiefe durch mit dem Aufnahmekörper zusammenwirkenden Anschlägen begrenzt ist, die auf der, dem schneidenartigen Bund gegenüberliegenden Seite der Bundbuchse angeordnet sind.

Gemäß einer letzten bevorzugten Ausführungsform des Gegenstandes der Erfindung ist vorgesehen, daß der Aufnahmekörper mit einer Mehrzahl zu seiner Längsachse verlaufenden Aufnahmen ausgestattet ist, von denen wenigstens eine im kürzesten Abstand zum Zentrum des Querschnitts des Aufnahmekörpers im Bereich einer seine Außenkontur begrenzenden Wandung angeordnet ist, wobei durch die Anordnung ein filmscharnierähnlicher und ein breiter Wandabschnitt gebildet ist, von denen letzterer in dem Bereich, der dem filmscharnierähnlichen Wandabschnitt gegenüberliegt, über die gesamte Länge des Aufnahmekörpers bis hin zu der den filmscharnierähnlichen Wandabschnitt bildenden Aufnahme derart getrennt ist, daß die durch die Trennung entstandene Trennebene die verbleibenden Aufnahmen erfaßt und durchtrennt.

Der Vorteil einer solchen Lösung liegt nicht nur darin, daß jede der Aufnahmen für die Montage der Leitungen leicht zugänglich ist, sondern auch darin, daß durch die Trennung schalenartige Aufnahmehälften erzeugt sind, die bei der Montage der Leitung als eine Führung für diese dienen und somit die Montage der Leitungen erheblich erleichtern.

Die Erfindung ist in der nachfolgenden Beschreibung anhand einer in der Zeichnung vereinfacht dargestellten isolierten Wand eines Haushalts-Kühlgerätes erläutert. Es zeigen:
- Fig. 1: in einem Ausschnitt vereinfacht dargestellt, einen Vertikalschnitt durch die der Tür eines Kühlgerätes gegenüberliegende, wärmeisolierte Rückwand, in deren Wärmeisolation ein Durchführungskörper für eine in den Innenraum des Kühlgeräts führende Leitung eingebettet ist, in etwa in natürlichem Maßscab,
- Fig. 2: in einem Ausschnitt die Rückwand des Kühlgerätes im Bereich des mit einer Leitung beaufschlagten Durchführungskörpers gemäß der Schnittlinie II-II,
- Fig. 3: den Durchführungskörper gemäß Fig. 1, axial auseinandergezogen dargestellt, mit einer Bundbuchse, die mit einer als Tropfkante dienenden Bund ausgestattet ist und einem Aufnahmekörper zur Halterung und Abdichtung einer in gestrichelten Linien dargestellten Leitung innerhalb des Durchführungskörpers, etwa in natürlichem Maßstab und
- Fig. 4: eine der Fig. 2 ähnliche Darstellung des Durchführungskörpers, der jedoch im Unterschied dazu mit zwei Leitungen beaufschlagt ist.

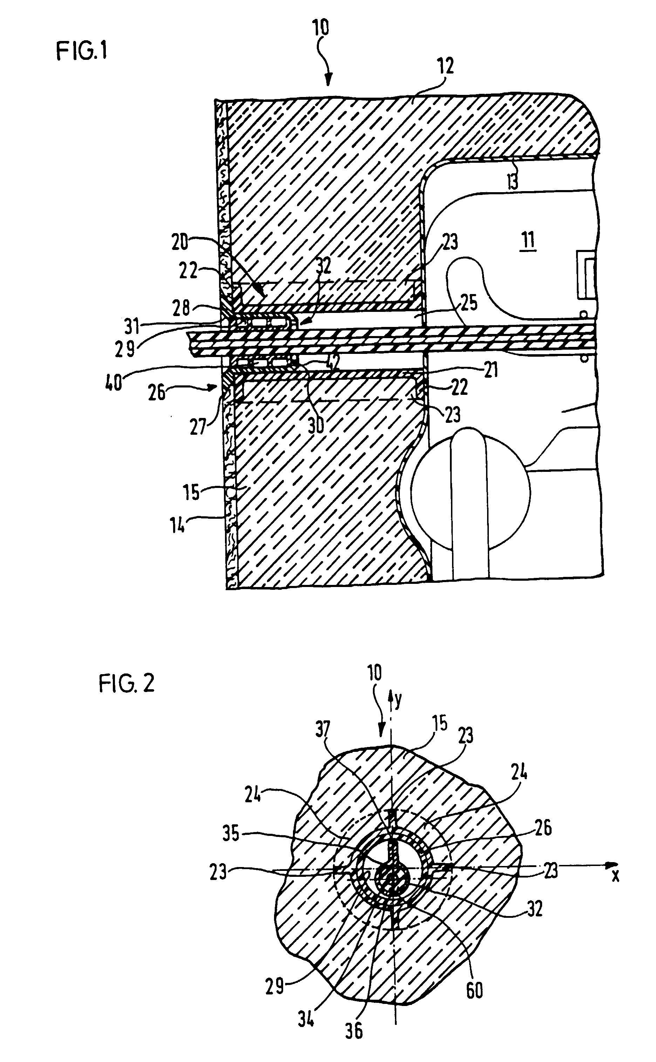

Gemäß Fig. 1 ist ein nur ausschnittsweise im rückwärtigen Bereich eines nicht näher bezeichneten Kühlgerätes dargestelltes Gehäuse 10 im Schnitt gezeigt, das einen zur Einlagerung von Kühlgut dienenden Innenraum 11 durch seine meisolierten Wände 12 bildet, von denen nur die Rückwand gezeigt ist. Die Wände 12 sind aus drei einzelnen, übereinander angeordneten Schichten aufgebaut, von denen die außen-liegenden als Deckschichten dienen, wobei die dem Innenraum 11 zugewandte Schicht durch die Rückwand 13 eines nicht näher dargestellten, durch Tiefziehen einer Kunststoffplatine erzeugten Kühlgutbehälters gebildet ist, während die vom Innenraum 11 abgewandte Deckschicht als aus Pappe gefertigte Außenabdeckung 14 ausgebildet ist. Zwischen diesen Deckschichten ist eine Schicht aus in flüssigen Ausgangskomponenten eingetragenen Polyurethanschaum angeordnet, die als Wärmeisolationsmaterial 15 dient. In das Wärmeisolationsmaterial 15 ist ein die Wandstärke der Wand 12 überbrückender, zu einem rotationssymmetrischen Durchführungskörper 20 gehörender, im wesentlichen die Gestalt eines geraden Kreishohlzylinders aufweisender Grundkörper 21 eingebettet. Dieser ist an seinen den beiden Deckschichten zugekehrten Stirnseiten jeweils mit einem bündig mit den Stirnseiten abschließenden, über die Mantelfläche des Hohlzylinders vorstehenden Ringflansch 22 ausgestattet, von denen einer mit seiner der Rückwand 13 des Kühlgutbehälters zugewandten Seite durch Ultraschallschweißen mit der Außenwand der Rückwand 13 verbunden ist, während der andere der Außenabdeckung 14 zugewandte Ringflansch 22 als Auflager für diese dient. Zwischen den beiden mit dem Ringflansch 22 versehenen Stirnseiten des Grundkörpers 21 sind vier über den Umfang von dessen Mantelfläche gleichmäßig verteilt angeordnete Längsrippen 23 vorgesehen, die mit dem Ringflansch 22 verbunden sind, wodurch an der Mantelfläche des Grundkörpers 21 Kammern 24 gebildet sind, die mit Wärmeisolationsmaterial 15 ausgeschäumt sind, um den Grundkörper 21 formschlüssig und gleichzeitig verdrehsicher in das Wärmeisolationsmaterial 15 einzubetten.

Von der der Außenverkleidung 14 zugekehrten Stirnseite des Grundkörpers 21 her ist in dessen als Durchführung 25 dienenden Bohrung eine Bundbuchse 26 reibschlüssig eingesteckt, deren rohrförmiger Buchsenabschnitt mit seiner Mantelfläche mit der Innenwandung der Durchführung 25 eine luftdichte Verbindung zwischen beiden erzeugt, die im Bedarfsfall wieder auflösbar ist. Die Einstecktiefe der Bundbuchse 26 in die Durchführung 25 wird durch den Anschlag der dem rohrförmigen Buchsenabschnitt zugewandten Seite eines mit einer schneidenförmigen Tropfkante 27 für Kondenswasser versehenen Bundes 28 begrenzt. Die Bundbuchse 26 ist zentrisch zu ihrem Querschnitt mit einer im Querschnitt kreisförmigen Durchgangsbohrung 29 ausgestattet, die bei in den Grundkörper 21 eingesetzter Bundbuchse 26 einen Abschnitt der Durchführung 25 darstellt und auf ihrer der Rückwand 13 des Kühlgutbehälters zugekehrten Seite mit drei von der Wandung der Durchgangsbohrung 29 ausgehenden, zu deren Bohrungsachse gerichteten, in deren Innenraum ragenden, stummelartigen Anschlägen 30 versehen ist, die über den Umfang der Durchgangsbohrung 29 gleichmäßig verteilt angeordnet sind. Die den Anschlägen 30 gegenüberliegende Seite der Durchgangsbohrung 29 ist mit einer Einführschräge 31 ausgestattet, die das Anfasen und Einführen eines Aufnahmekörpers 32 in die Durchgangsbohrung 29 erheblich erleichtert, wobei dieser im in die Durchgangsbohrung 29 eingesetzten Zustand die Form eines geraden Kreiszylinders aufweist.

Wie insbesondere Fig. 2 zeigt, ist der Aufnahmekörper 32 mit einer, im eingefügten Zustand ebenfalls mit kreisförmigem Querschnitt versehenen, im Bereich einer die Außenkontur des Aufnahmekörpers 32 begrenzenden Wandung angeordneten Aufnahme 33 ausgestattet, deren Zentrum 34 versetzt zum Zentrum 35 des kreisförmigen Querschnitts des Aufnahmekörpers 32 angeordnet ist, wobei jedoch das Zentrum 34 mittig zu der durch das Zentrum 35 verlaufenden, mit y bezeichneten Symmetrieachse liegt, während es zu der ebenfalls durch das Zentrum 35 verlaufenden Symmetrieachse x versetzt ist. Durch die versetzte Anordnung der Aufnahme 33 sind entlang der Symmetrieachse y Wandabschnitte mit unterschiedlicher Wandstärke gebildet, von denen der dünnere, mit 36 bezeichnete Wandabschnitt filmscharnierähnlich ausgebildet ist, während der breitere Wandabschnitt 37 über die gesamte Länge des Aufnahmekörpers 32 bis hin zur Aufnahme 33 getrennt ist, wobei die Trennebene die Symmetrieachse y beinhaltet und somit durch das Zentrum 34 der Aufnahme verläuft, so daß diese in zwei in etwa mit im Querschnitt gleichen Flächenanteil versehene Abschnitte geteilt ist.

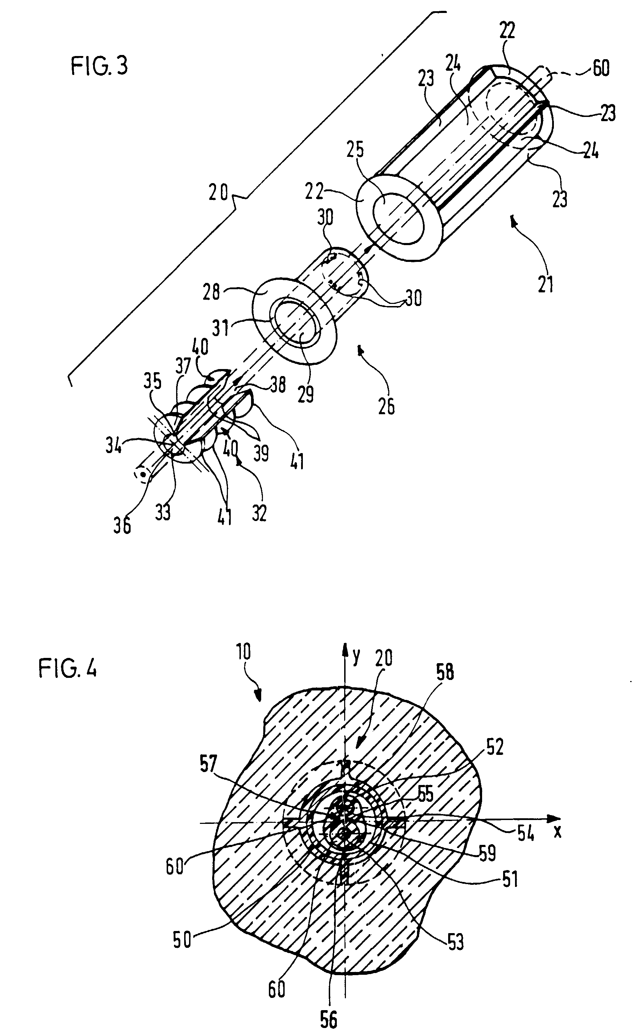

Ist wie in Fig. 3 dargestellt, der Aufnahmekörper 32 aus der Durchgangsbohrung 29 der Bundbuchse 26 entfernt, befindet sich dieser in seiner entspannten Ruhelage und die in der Ebene der Symmetrieachse y liegende Trennstelle ist zu einem mit im wesentlichen V-förmigen Querschnitt versehenen Spalt 38 geöffnet. Die Breite des Spaltes 38 wird durch symmetrisch zur Symmetrieachse y angeordnete, an die Aufnahme 33 anbindende Trennflächen 39 begrenzt.

Wie insbesondere Fig. 3 zeigt, verläuft die Aufnahme 33 parallel zur Längsachse des Aufnahmekörpers 32, der mit einer Mehrzahl seinen Querschnitt gleichmäßig verjüngenden, im wesentlich durchgängig umlaufenden Nuten, ausgestattet, wobei die durch die Nuten 40 entstandenen erhabenen Abschnitte als Lamellen 41 ausgebildet sind, welche in etwa in gleichmäßigen Abständen zueinander über die gesamte Länge des Aufnahmekörpers 32 angeordnet sind und sich gegenüber ihrem Lamellengrund elastisch verformen lassen. Die Höhe der im Bereich des filmscharnierähnlichen Wandabschnittes 36 angeordnete Lamellen 41 ist deutlich reduziert, wodurch die Steifigkeit des filmscharierähnlichen Wandabschnittes 36 erheblich verringert ist und somit annähernd drehgelenkähnliche Eigenschaften aufweist. Die beiden außenliegenden, mit den Stirnseiten des Aufnahmekörpers 32 bündig abschließenden Lamellen 41 sind unterschiedlich stark ausgeführt, wobei die schmälere, in Einbaulage an den Anschlägen 30 anliegende Lamelle 41 mit einer Fase 42 versehen ist, die bei der Montage des Aufnahmekörpers 32 in die Bundbuchse 26 mit der an dieser ordneten Einführschräge 31 zusammenwirkt und eine Art Zentriereffekt zur Durchgangsbohrung 29 erzeugt. Die stärkere der stirnseitigen Lamellen 41 bewirkt bei in die Durchgangsbohrung 29 eingefügten Aufnahmekörper 32 einen Art Rasteffekt bezüglich der Wandung der Durchgangsbohrung 29.

In Fig. 4 ist ein in die Durchgangsbohrung 29 der Bundbuchse 26 eingefügter Aufnahmekörper 50 dargestellt, der sich von dem bereits beschriebenen Aufnahmekörper 32 im wesentichen darin unterscheidet, daß er mit zwei parallel zu seiner Längsachse verlaufenden, mit unterschiedlichen, kreisförmigen Querschnitt versehenen Aufnahmen 51 und 52 ausgestattet ist, deren Zentren 53 und 54 zu der durch das Zentrum 55 des Aufnahmekörpers verlaufenden Symmetrieachse x versetzt sind, während sie auf der mit y bezeichneten Symmetrieachse mit Abstand zueinander angeordnet sind. Durch die Anordnung der mit der größeren Querschnittsfläche versehenen Aufnahme 51 nahe der die Außenkontur des Aufnahmekörpers 50 begrenzenden Wandung ist wiederum ein filmscharnierähnlicher Wandabschnitt 56 und ein mit breiter Wandstärke versehener Wandabschnitt 57 gebildet. Letzterer ist identisch zu dem Wandabschnitt 37 des Aufnahmekörpers 32 getrennt, aber mit der Aufnahme 52 versehen, deren Zentrum 54 so auf der Symmetrieachse y liegt, daß sowohl zur Aufnahme 51 hin, als auch zur Außenkontur des Aufnahmekörpers 50 hin, stegartige Wandungen 58 und 59 mit in etwa gleicher Wandstärke bestehen bleiben. Deren durch die Trennung entstandenen Abschnitte werden, wenn der Aufnahmekörper 50 in die Durchgangsbohrung 29 eingefügt ist, aufeinandergepreßt und dienen als Dichtflächen. Zur Unterstützung der Dichtfunktion kann jeweils einer der Abschnitte mit in Richtung der Trennebene angeordneten schneidenartigen Profilen ausgestattet sein.

Soll eine Leitung 60 mit kreisförmigem Querschnitt, z.B. in Form einer mit einem Temperaturfühler bestückten Fühlerleitung von außen in den Innenraum 11 des nur ausschnittsweise skizzierten Kühlgerätes eingebracht werden, so wird auf diese, bevor sie mit ihrem mit dem Fühler bestückten freien Ende über die Durchführung 25 in den Innenraum 11 eingeführt wird, die Bundbuchse 26 aufgefädelt, wobei deren Einführschräge 31 im aufgefädelten Zustand vom Innenraum 11 abgewandt ist. Daraufhin wird die Bundbuchse 26 mit ihrem rohrförmigen Buchsenabschnitt in die Durchführung 25 eingeführt und in Richtung zum Innenraum 11 hin soweit verschoben, bis die von der Tropfkante 27 abgewandte Seite des Bundes 28 an der ihr zugekehrten Seite des Ringflansches 22 anschlägt. In dieser Stellung ist zwischen der Bundbuchse 26 und der Wandung der Durchführung 25 eine luftdichte Verbindung zwischen beiden mittels Kraftschluß in Form eines Reibschlusses erzeugt.

Um die Leitung 60 im Durchführungskörper 20 zu fixieren und zu diesem abzudichten, wird auf ihre Mantelfläche der Aufnahmekörper 32 aufgebracht, wobei der aufgebrachte Aufnahmekörper 32 mit seiner mit der Fase 42 versehenen stirnseitigen Lamelle 41 in Richtung der Einführschräge 31 zeigt. Das Aufbringen des Aufnahmekörpers 32 auf die Leitung 60 beginnt mit dem Aufsetzen der Trennflächen 39 des V-förmig geöffneten Spaltes 38 auf die Mantelfläche der Leitung 60, wobei die Trennflächen 39 sowohl als Aufgleitkufen als auch als Einführschrägen dienen. In einem zweiten Schritt wird die beim Aufsetzen des Aufnahmekörperes 32 auf die Leitung 60 aufgewandte Kraft auf den dem Spalt 38 gegenüberliegenden filmscharnierähnlichen Wandabschnitt 36 erhöht, wodurch die infolge der V-förmigen Anordnung der Trennflächen 39 auf diese einwirkenden Kraftkomponenten der Aufsetzkraft, der Spalt 38, über den Drehpunkt im filmscharnierähnlichen Wandabschnitt 36, entgegen der durch seine elastischen Materialeigenschaften erzeugten Gegenkraft soweit geöffnet, bis die Leitung 60 durch eine Art Schnappvorgang an der Übergangstelle der Trennflächen 39 zur Aufnahme 33 in letztere übergeht. Unmittelbar nachdem die Leitung 60 mit ihrem Durchmesser die Übergangsstelle passiert hat, federn die beiden Trennflächen, angetrieben von den elastischen Materialeigenschaften des filmscharnierartigen Wandabschnittes 36 in ihre Ruhelage zurück, wodurch für den Außendurchmesser der Leitung 60 ein Hinterschnitt erzeugt ist, durch den der Aufnahmekörper 32 durch seine Aufnahme 33 formschlüssig mit der Leitung 60 verbunden und dennoch entlang ihrer Mantelfläche gleitend verschiebbar ist.

Zum Abdichten der Leitung 60 im Durchführungskörper 20 wird der gleitend auf der Leitung 60 geführte Aufnahmekörper 32 in die Durchgangsbohrung 29 der Bundbuchse 26 eingedrückt, bis die den Anschlägen 30 zugewandte Stirnseite der mit der Fase 42 versehenen Lamelle 41 an diesen anliegt, wobei die erreichte Endlage des Aufnahmekörpers 32 durch einen Übergang in eine Rast signalisiert und gesichert ist, die durch die breitere der stirnseitigen Lamellen 41 des Aufnahmekörpers 32 bezüglich der Wandung der Durchgangsbohrung 29 erzeugt ist.

Infolge der auf die Lamellen 41 durch die Wandung der Durchgangsbohrung 29 ausgeübten Kraft werden die Trennflächen 39 dichtend aufeinandergepreßt. In diesem Zustand ist die Leitung 60 vollkommen von der Aufnahme 33 umschlossen ist und durch einen Kraftschluß den die Wandung 33 auf die Mantelfläche der Leitung 60 ausübt, derart gehalten, daß eine Luftdichte Verbindung zwischen der Mantelfläche der Leitung 60 und der Wandung der Aufnahme 33 entsteht.

Durch die Krafteinwirkung der Wandung der Durchgangsbohrung 29 auf die Lamellen 41 legen sich diese mit ihrer Außenkontur an die Wandung der Durchgangsbohrung 29 elastisch an, so daß eine Luftdichte Verbindung zwischen beiden entsteht, in Form einer durch den gleichmäßigen Abstand der Lamellen 41 zueinander erzeugten Labyrinthdichtung.

Die Montage der in Fig. 4 dargestellten, nicht näher bezeichneten Leitungen verläuft analog zu dem vorangehend schriebenen Ablauf.

Ferner ist auch vorstellbar, den Aufnahmekörper 32 als geraden Kreiskegelstumpf auszubilden, wobei die Durchgangsbohrung 29 der Bundbuchse 26 entsprechend der Neigung des Kegelstumpfes angepaßt sein müßten.

Außerdem können, abweichend vom Ausführungsbeispiel, der Aufnahmekörper im in die Durchführung eingesetzten Zustand, der Grundköprer und die Bundbuchse mit einem quadratischen, rechteckförmigen, dreieckförmigen oder ovalen Querschnitt ausgestattet sein. Die Aufnahme im Aufnahmekörper ist dabei an den jeweiligen Querschnitt der Leitung oder eines Rohres angepaßt.

Alle Bestandteile des Durchführungskörpers können beispielsweise aus thermoplastischem Material durch Spritzguß hergestellt sein.

## Patentansprüche

1. Durchführungskörper (30) für Leitungen (60) durch eine Wand (12) mit einer im wesentlichen deren Wandstärke überbrückenden Länge und wenigstens einer annähernd parallel zu seinen Mantellinien verlaufenden Durchführung (25), in welche ein Aufnahmekörper (32) lösbar einsetzbar ist, welcher wenigstens eine im wesentlichen parallel zu seiner Längsachse verlaufende Aufnahme (33) zur Halterung einer Leitung (60) aufweist und welcher die Leitung bezüglich der Durchführung (25) fixiert, **dadurch gekennzeichnet,** daß die Aufnahme (33) im Aufnahmekörper (32) im Nahbereich von dessen Mantelfläche angeordnet und durch einen filmscharnierartigen Wandabschnitt (36) von dieser getrennt ist, und daß der dem filmscharnierartigen Wandabschnitt (36) gegenüberliegende, an die Aufnahme (33) angrenzende breitere Wandabschnitt (37) entlang der Längsachse des Aufnahmekörpers (32) mit einem Schlitz durchtrennt ist.

2. Durchführungskörper nach Anspruch 1, **dadurch gekennzeichnet,** daß die Aufnahme (33) im kürzesten Abstand vom Zentrum des Querschnitts des Aufnahmekörpers (32) im Bereich einer seine Außenkontur begrenzenden Wandung angeordnet ist.

3. Durchführungskörper nach Anspruch 1 oder 2, **dadurch gekennzeichnet,** daß die Aufnahme (33) mittig zu der Trennebene angeordnet ist, welche den durch die Trennung des breiteren Wandabschnitts (37) des Aufnahmekörpers (32) gebildeten Trennflächen (39) gemeinsam ist.

4. Durchführungskörper nach Anspruch 3, **dadurch gekennzeichnet,** daß die durch die Trennung entstandenen Trennflächen (39) ohne Krafteinfluß auf die sich daran anschließenden Abschnitte des Aufnahmekörpers (32) im Abstand zueinander angeordnet sind, aber bei in die Durchführung (25) eingefügten Aufnahmekörper (32) aneinanderliegen und als Dichtflächen dienen.

5. Durchführungskörper nach Anspruch 3 oder 4, **dadurch gekennzeichnet,** daß die Trennflächen (39) im unbelasteten Zustand des Aufnahmekörpers (32) zueinander annähernd V-förmig angeordnet sind.

6. Durchführungskörper nach einem der Ansprüche 1 bis 5, **dadurch gekennzeichnet,** daß die Mantelfläche des Aufnahmekörpers (32) mit einer Mehrzahl von seinen Querschnitt verjüngenden, im wesentlichen durchgängig umlaufenden Nuten (40) ausgestattet ist, wobei die durch die Nuten (40) entstandenen, erhabenen Abschnitte als elastische Lamellen (41) ausgebildet sind, die über die Länge des Aufnahmekörpers (32) verteilt angeordnet sind und sich an die Wandung der Durchführung (25) anlegen, wodurch eine luftdichte Verbindung zwischen dieser und dem Aufnahmekörper (32) erzeugt und der Aufnahmekörper (32) in der Durchführung (25) gehalten ist.

7. Durchführungskörper nach einem der Ansprüche 1 bis 6, **dadurch gekennzeichnet,** daß der Aufnahmekörper (32) mit wenigstens einer parallel zu seiner Längsachse verlaufenden Aufnahme (33) für die Leitung (60) ausgestattet ist, in der die Leitung (60) an ihrer Mantelfläche infolge der auf diese kraftschlüssig allseitig einwirkenden Wandungen der Aufnahme (33) manschettenartig luftdicht gehalten ist.

8. Durchführungskörper nach einem der Ansprüche 1 bis 3 oder 7, **dadurch gekennzeichnet,** daß die Aufnahme (33) an ihrer der Mantelfläche der Leitung (60) zugewandten Oberfläche und eine der Trennflächen (39) mit zusammenhängenden, schneidenartigen Vorsprüngen ausgestattet ist, die die Dichtwirkung bezüglich dem Dichtpartner unterstützen.

9. Durchführungskörper nach Anspruch 1, mit einer Abtropfkante, **dadurch gekennzeichnet,** daß die Abtropfkante (27) als schneidenförmiger Bund einer Bundbuchse (26) ausgeführt ist, die eine luftdichte Verbindung zwischen der Wandung der Durchführung (25) und ihrer Mantelfläche schaffend, in die Durchführung (25) des Durchführungskörpers (20) einfügbar ist.

10. Durchführungskörper nach Anspruch 9, **dadurch gekennzeichnet,** daß in den Innendurchmesser der Bundbuchse (26) der Aufnahmekörper (32) derart eingefügt ist, daß seine Lamellen (41) luftdicht an den den Innendurchmesser begrenzenden Wandung anliegen, wobei die Einführtiefe durch mit dem Aufnahmekörper (32) zusammenwirkenden Anschlägen (30) begrenzt ist, die auf der den schneidenartigen Bund (28) gegenüberliegenden Seite der Bundbuchse (26) angeordnet sind.

11. Durchführungskörper nach Anspruch 1, **dadurch gekennzeichnet,** daß der Aufnahmekörper (50) mit einer Mehrzahl parallel zu seiner Längsachse verlaufenden Aufnahmen (51, 52) ausgestattet ist, von denen wenigstens eine im kürzesten Abstand vom Zentrum (55) des Querschnitts des Aufnahmekörpers (50) im Bereich einer seine Außenkontur begrenzenden Wandung angeordnet ist, wobei durch die Anordnung ein filmscharnierähnlicher und ein breiter Wandabschnitt (56, 57) gebildet ist, von denen letzterer in dem Bereich, der dem filmscharnierähnlichen Wandabschnitt (56) gegenüberliegt, über die gesamte Länge des Aufnahmekörpers (50) bis hin zu der den filmscharnierähnlichen Wandabschnitt (56) bildenden Aufnahme (51) derart getrennt ist, daß die durch die Trennung entstandene Trennebene die verbleibenden Aufnahmen (52) erfaßt und durchtrennt.

## Claims

1. Lead-through body (30) for cables through a wall (12), with a length substantially bridging over the wall thickness thereof and at least one through-guide (25), which extends substantially parallel to its circumferential surface line and in which a receiving body (32) is removably insertable, which receiving body has at least one receptacle (33), which extends substantially parallel to its longitudinal axis, for holding a cable (60) and which fixes the cable with respect to the through-guide (25), characterised thereby that the receptacle (33) in the receiving body (32) is arranged in the proximity of the circumferential surface thereof and is separated therefrom by a wall portion (36) in the manner of a film hinge, that the wider wall portion (37), which is disposed opposite the wall portion (36) like a film hinge and adjoins the receptacle (33), is cut through along the longitudinal axis of the receiving body (32) by a slot.

2. Lead-through body according to claim 1, characterised thereby that the receptacle (33) is arranged at the shortest distance from the centre of the cross-section of the receiving body (32) and in the region of a wall bounding its outer profile.

3. Lead-through body according to claim 1 or 2, characterised thereby that the receptacle (33) is arranged centrally with respect to the separating plane which is common to the separating surfaces (39) formed by the separation of the wider wall portion (37) of the receiving body (32).

4. Lead-through body according to claim 3, characterised thereby that the separating surfaces (39) arising through the separation are arranged at a spacing from one another and without force influence on the portion of the receiving body (32) adjoining thereat, but lie against one another when the receiving body (32) is inserted in the through-guide (25) and serve as sealing surfaces.

5. Lead-through body according to claim 3 or 4, characterised thereby that the separating surfaces (39) are arranged approximately in V shape relative to one another in the unloaded state of the receiving body (32).

6. Lead-through body according to one of claims 1 to 5, characterised thereby that the circumferential surface of the receiving body (32) is equipped with a plurality of substantially generally encircling grooves (40) narrowing its cross-section, wherein the elevated Dortions arising by virtue of the grooves (40) are formed as resilient platelets (41), which are arranged distributed over the length of the receiving body (32) and bear against the wall of the through-guide (25), whereby an air-tight connection between this and the receiving body (32) is produced and the receiving body (32) is retained in the through-guide (25).

7. Lead-through body according to one of claims 1 to 6, characterised thereby that the receiving body (32) is equipped with at least one receptacle (33), which extends parallel to the longitudinal axis of the body and in which the cable (60) is airtightly held at its circumferential surface in the manner of a sleeve due to the walls of the receptacle (33) acting force-lockingly thereon at all sides, for the cable (60).

8. Lead-through body according to one of claims 1 to 3 or 7, characterised thereby that the receptacle (33) is equipped at its surface, which faces the circumferential surface of the cable (60), and one of the separating surfaces (39) with interconnected, blade-like projections which enhance the sealing effect with respect to the sealing partner.

9. Lead-through body according to claim 1, with a drip edge, characterised thereby that the drip edge (27) is constructed as a blade-shaped flange of a flange bush (26), which is insertable into the through-guide (25) of the lead-through body (20) and creates an air-tight connection between the wall of the through-guide (25) and its circumferential surface.

10. Lead-through body according to claim 9, characterised thereby that the receiving body (32) is inserted into the inner diameter of the flange bush (26) in such a manner that its platelets (41) airtightly bear against the wall bounding the inner diameter, wherein the insertion depth is limited by abutments (30) which co-operate with the receiving body (32) and which are arranged on the side of the flange bush (26) opposite to the blade-like flange (28).

11. Lead-through body according to claim 1, characterised thereby that the receiving body (50) is equipped with a plurality of receptacles (51, 52), which extend parallel to its longitudinal axis and of which at least one at the shortest spacing from the centre (55) of the cross-section of the receiving body (50) is arranged in the region of a wall bounding the outer profile of the body, wherein a wall portion (56) which is similar to a film hinge and a wall portion (57) which is wider are formed by the arrangement, the latter of which is cut through in the region opposite the wall portion (56) similar to a film hinge and over the entire length of the receiving body (50) up to the receptacle (51), which forms the wall portion (56) similar to a film hinge, in such a manner that the separating plane resulting from the division picks up and cuts through the remaining receptacles (52).

## Revendications

1. Elément de traversée (20) pour le passage de conduites (60) à travers une paroi (12), présentant une longueur qui correspond sensiblement à l'épaisseur de la paroi et au moins un conduit de traversée (25) approximativement parallèle à ses génératrices, dans lequel une garniture (32) qui présente au moins un passage (33) sensiblement parallèle à son axe longitudinal pour une conduite (60) et qui bloque ladite conduite par rapport au conduit de traversée (25) est insérée de manière démontable, caractérisé par le fait que le passage (33) dans la garniture (32) est disposé dans le voisinage immédiat de la surface extérieure de la garniture et est séparé de celle-ci par une partie de paroi (36) formant charnière-film, par le fait que la partie de paroi (37) plus large située à l'opposé de la partie de paroi (36) formant charnière-film voisine du passage (33) est divisée par une fente dans la direction de l'axe longitudinal de la garniture (32).

2. Elément de traversée selon la revendication 1, caractérisé par le fait que le passage (33) est disposé à une distance minimale du centre de la section de la garniture (32), dans la région d'une paroi qui délimite son contour extérieur.

3. Elément de traversée selon la revendication 1 ou 2, caractérisé par le fait que le passage (33) est disposé au centre du plan de séparation qui est commun aux surfaces de séparation (39) formées par la division de la partie de paroi (37) plus large.

4. Elément de traversée selon la revendication 3, caractérisé par le fait que les surfaces de séparation (39) résultant de la division sont éloignées l'une de l'autre en l'absence de forces agissant sur les parties de la garniture (32) liées à celles-ci mais et sont appliquées l'une contre l'autre et servent de surfaces d'étanchéité lorsque la garniture (32) est insérée dans le conduit de traversée (25).

5. Elément de traversée selon la revendication 3 ou 4, caractérisé par le fait que les surfaces de séparation (39) sont disposées sensiblement en V l'une par rapport à l'autre lorsque la garniture (32) est hors contrainte.

6. Elément de traversée selon l'une des revendications 1 à 5, caractérisé par le fait que la surface extérieure de la garniture (32) est pourvue d'une pluralité de gorges (40) circulaires essentiellement continues qui diminuent sa section, les parties en relief définies par les gorges (40) formant des lamelles (41) élastiques qui sont réparties sur la longueur de la garniture (32) et viennent en appui sur la paroi du conduit de traversée (25), une liaison étanche à l'air entre ledit conduit de traversée et la garniture (32) étant ainsi réalisée et la garniture (32) étant tenue dans le conduit de traversée (25).

7. Elément de traversée selon l'une des revendications 1 à 6, caractérisé par le fait que la garniture (32) est pourvue d'au moins un passage (33) pour la conduite (60) qui s'étend essentiellement parallèlement à son axe longitudinal et dans lequel la conduite (60) est tenue de manière étanche à l'air, comme par un manchon, au niveau de sa surface extérieure par les parois du passage (33) qui la serrent de tous côtés.

8. Elément de traversée selon l'une des revendications 1 à 3 ou 7, caractérisé par le fait que le passage (33), sur sa surface tournée vers la surface extérieure de la conduite (60), ainsi que l'une des surfaces de séparation (39) sont pourvus de saillies continues en forme d'arêtes qui renforcent l'étanchéité entre les éléments.

9. Elément de traversée selon la revendication 1 comportant un rejet d'eau (27), caractérisé par le fait que le rejet d'eau (27) se présente sous la forme d'un collet effilé d'une douille (26) à collet qui est insérée le conduit de traversée (25) de l'élément de traversée (20) et assure une liaison étanche à l'air entre la paroi du conduit de traversée (25) et sa surface extérieure.

10. Elément de traversée selon la revendication 9, caractérisé par le fait que la garniture (32) est montée dans le diamètre intérieur de la douille (26) à collet de manière telle que ses lamelles (41) sont appliquées de manière étanche à l'air sur la paroi qui délimite le diamètre intérieur, la profondeur d'engagement étant limitée par des butées (30) qui coopèrent avec la garniture (32) et sont disposées du côté de la douille (26) à collet opposé au collet (28) effilé.

11. Elément de traversée selon la revendication 1, caractérisé par le fait que la garniture (50) est pourvue d'une pluralité de passages (51, 52) qui s'étendent parallèlement à son axe longitudinal, parmi lesquels l'un au moins est situé à une distance minimale du centre (55) de la section de la garniture (50), dans la région d'une paroi qui délimite son contour extérieur, des parties de paroi (56, 57) en forme de charnière-film et large étant formées par cette disposition, parmi lesquelles la partie de paroi qui est disposée à l'opposé de la partie de paroi (56) formant charnière-film est divisée sur toute la longueur de la garniture (50), jusqu'au passage (51) qui définit la partie de paroi (56) formant charnière-film, de telle sorte que le plan de séparation obtenu par la division englobe les passages (52) restants et les divise.
